# EUROPEAN PATENT SPECIFICATION

(11) **EP 4 240 580 B1**
(45) Date of publication and mention of the grant of the patent: **30.10.2024**
(21) Application number: 21737162.4
(22) Date of filing: 21.06.2021
(51) Int. Cl.: B29D 99/00, B29C 70/68, A63B 37/00, A63B 43/00, A63B 45/00

(54) **METHOD FOR INCORPORATING A TRACKING DEVICE WITHIN A BODY OF ELASTOMERIC MATERIAL AND TRACKABLE BODY OBTAINED THEREBY**
VERFAHREN ZUM EINBAUEN EINER NACHFÜHRVORRICHTUNG IN EINEN KÖRPER AUS ELASTOMEREM MATERIAL UND NACH DIESEM VERFAHREN HERGESTELLTER NACHFÜHRKÖRPER
PROCÉDÉ D'INCORPORATION D'UN DISPOSITIF DE POURSUITE DANS UN CORPS DE MATÉRIAU ÉLASTOMÈRE ET CORPS TRAÇABLE OBTENU AINSI

(30) Priority: 03.11.2020 IT 202000026116
(43) Date of publication of application: 13.09.2023
(73) Proprietor: TYG S.r.l., 25038 Rovato (BS) (IT)
(72) Inventor: LANCINI, Marco, 25038 Rovato (Brescia) (IT)
(74) Representative: Zermani Biondi Orsi, Umberto
(86) International application number: PCT/IB2021/055440
(87) International publication number: WO 2022/096945

(56) References cited:
- EP-A2- 1 547 824
- WO-A1-01/02060

## Description

The present invention relates to a method for incorporating a tracking device within a body of elastomeric material, in particular rubber, making such a body trackable.

The present invention further relates to a generic trackable body, made with such a method, and in particular a trackable golf ball also made with the aforesaid method.

The expression "elastomeric material body" means a generic artefact, or a portion thereof, of elastomeric material which, in use, needs to be tracked.

As is known, many artefacts and items for both industrial and commercial use need to be monitored.

In particular, the issue of trackability is important for reconstructing the history of the artefact and/or for determining the origin of the raw materials and/or for reconstructing the processes used to obtain it.

Such a need mainly arises from the intention to prevent safety problems related to the possible non-conformity of large-scale manufactured items as well as from the need to maintain useful information associated with the product during the useful life thereof.

Among the various systems used to associate this information with artefacts, there are solutions such as bar codes.

In other words, labels are applied, generally with adhesives, on the surface of the artefact on which the aforementioned barcode is obtained.

This solution has several disadvantages since, in many cases, it is difficult to apply the labels to the artefact due to the peculiar geometric shape thereof. Furthermore, where the label can be applied, it may be difficult to ensure the integrity thereof for the entire useful life of the artefact. In other words, the label could detach from the artefact and the barcode may wear out due to different uses.

A further system to associate the information with the product is to incorporate an RFID tag within the product.

In these cases, the RFID tags are inserted within the artefact during the production process. This operation ensures durability over time but is not applicable to artefacts made of elastomeric materials which, in use, are subject to mechanical stresses and/or deformations.

In fact, in the event of strong and/or prolonged mechanical stresses and/or deformations, the RFID tag, and in particular the antenna of the RFID tag, are subject to possible damage and breakage.

Furthermore, the artefact into which the RFID tag is inserted is also subject to possible damage and breakage, as the RFID tag causes discontinuities therein.

EP1547824 A2 discloses a method for incorporating a tracking device within a tire of elastomeric material, comprising the steps of providing a semi-finished tire made of a raw rubber, providing a tracking device, providing an insert, joining by means of textile technique said tracking device and said insert so as to obtain a trackable insert, providing a mould, inserting said semi-finished tire and said trackable insert into said mould, obtaining a trackable body by moulding said semi-finished tire together with said trackable insert and a curing procedure.

In the light of the above, the technical task of the present invention is to propose a method for incorporating a tracking device within a body of elastomeric material as well as a trackable body, and in particular a golf ball, in which a tracking device is incorporated by means of such a method, which overcome at least some of the drawbacks of the prior art mentioned above.

In particular, an object of the present invention is to provide a method for incorporating a tracking device inside a body of elastomeric material as well as a trackable body and a trackable golf ball such as to resist mechanical stresses and/or deformations to which they are normally subjected, in use, during the useful life thereof in order to maintain the integrity of a tracking device contained within the trackable body.

A further object of the present invention is to provide a method for incorporating a tracking device within a body of elastomeric material as well as a trackable body and a trackable golf ball, such as to make the tracking device capable of resisting the mechanical stresses and/or deformations to which it is subject during the useful life thereof.

A further object of the present invention is to provide a method for incorporating a tracking device within a body of elastomeric material as well as a trackable body and a trackable golf ball, such as not to alter the performance and/or technical features of the trackable body or the trackable golf ball.

The technical task mentioned and the objects stated are substantially achieved by a method for incorporating a tracking device within a body of elastomeric material as defined in claim 1.

The aforementioned technical task and the specified objects are further achieved by a trackable body and a trackable golf ball, obtained by the aforementioned method and comprising the technical features set out in the present description.

Further features of the present invention will become clearer from the indicative, and therefore non-limiting, description of a preferred, yet not exclusive, embodiment of the aforesaid method as well as the trackable body and the trackable golf ball, as illustrated in the appended drawings, in which:

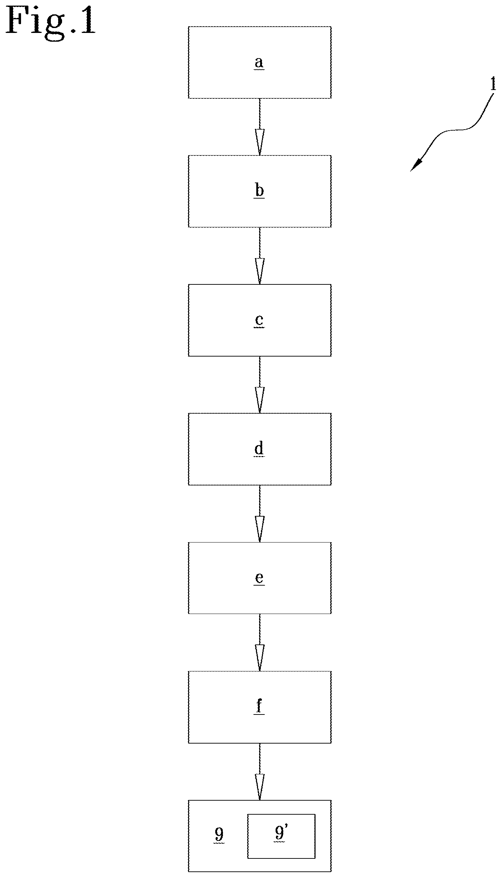

- figure 1 is a block diagram of the steps of carrying out a method for incorporating a tracking device within a body of elastomeric material object of the present invention;
- figures 2a and 2b are respective views of an exemplary and non-limiting embodiment of a trackable insert obtained by the method of figure 1;
- figure 3 is a schematic perspective view of a trackable golf ball obtained by the aforementioned method.

With reference to the appended drawings, reference numeral 1 globally indicates a method for incorporating a tracking device 200 within a body of elastomeric material, in accordance with the present invention.

The method 1 comprises a step "a" which includes providing a semi-finished product made of a raw elastomeric material.

The term "semi-finished product" means one or more portions of a given amount of raw elastomeric material, preferably rubber or a thermoplastic polymer.

Preferably, the term "semi-finished product" means one or more portions of such a given amount of raw elastomeric material already pre-shaped to be inserted into a mould, as will be seen in the following description.

The method 1 comprises a step "b" of providing a tracking device 200.

According to a particular embodiment of the method 1, the step "b" includes providing an RFID tag, comprising a chip 201 and an antenna 202, associated with the chip 201, in which said antenna 202 is made of a ductile material and in a threadlike shape.

However, alternative embodiments of the method 1 are not to be excluded, in which the step "b" includes providing a tracking device 200 of technology equivalent to the RFID tag.

According to a further aspect, the tracking device 200 may be a passive or an active type device. In other words, the tracking device 200 can operate only as a receiver or transceiver.

The method 1 further includes a step "c" which includes providing an insert 100.

Preferably, the step "c" includes providing an insert 100 consisting at least partially of raw elastomeric material. Preferably, the step "c" includes providing an insert 100 entirely consisting of raw elastomeric material.

Even more preferably, the step "c" includes providing an insert 100 consisting at least partially or entirely of the same material with which the aforementioned semi-finished product is made.

At this point, the method 1 includes a step "d" of joining the tracking device 200 and the insert 100 so as to obtain a trackable insert 300 by means of textile technique.

The term "textile technique" refers to a technique for joining and/or uniting two or more bodies having relevance to the textile arts, such as sewing, weaving and the like.

Such joining and/or uniting of two or more bodies may further require a further means adapted to mutually fix the two or more bodies, such as occurs in sewing with threads.

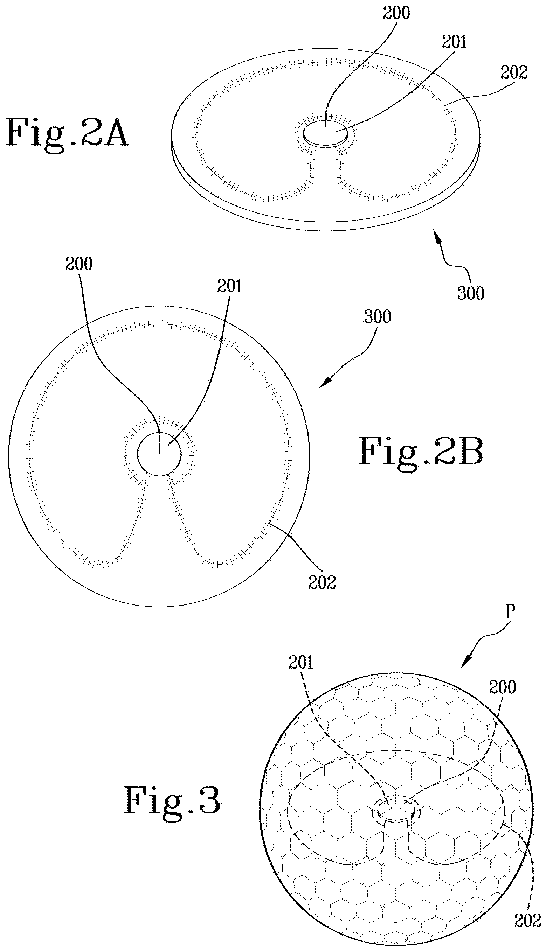

For example, according to a particular embodiment of the method 1 illustrated in figures 2a and 2b, the method 1 includes that in step "c" an insert 100 comprising a support in raw elastomeric material, preferably rubber or a thermoplastic polymer, is provided.

Even more preferably, according to such an embodiment, the step "c" includes providing a support having a substantially planar shape while the step "d" includes sewing the RFID tag on the aforesaid support.

In particular, the step "d" includes sewing the RFID tag on the aforesaid support by using thermoplastic threads, preferably made of rubber, even more preferably made of the same material as the support.

Preferably, the RFID tag is sewn on the support so that the chip 201 and the antenna 202 are arranged on one face of the support and so as to be substantially coplanar to the support itself.

In particular, at least one of the antenna 202 and chip 201 is sewn to the support.

For example, only the antenna 202 may be sewn or only the chip 201 may be sewn.

Alternatively, both antenna 2020 and chip 201 may be sewn

Preferably, the chip 201 is arranged in the centre of the support and is at least partially incorporated in a seat made on the support itself while the antenna 202 may be arranged so as to be positioned in a peripheral portion of the support, as clearly visible in the appended drawings.

According to a further particular embodiment of the exemplary and non-limiting method 1, the step "c" includes providing a plurality of thermoplastic threads while the step "d" includes weaving the plurality of thermoplastic threads with the antenna 202 of the RFID tag to obtain a knit thermoplastic fabric in which one fibre is formed by the antenna 202 of the RFID tag.

In other words, a substantially planar thermoplastic fabric into which the RFID tag is inserted is obtained.

In particular, in such an embodiment, the chip 201 may be arranged in the centre of the fabric, which extends around or to cover the chip 201 itself.

According to a further particular embodiment of the exemplary and non-limiting method 1, the step "c" includes providing a plurality of thermoplastic threads while the step "d" includes weaving the plurality of thermoplastic threads to obtain a knit thermoplastic fabric on which the RFID tag is sewn.

In other words, a substantially planar thermoplastic fabric onto which the RFID tag is sewn is obtained.

In particular, at least one of antenna 202 and chip 201 is sewn to the knit thermoplastic.

For example, only the antenna 202 may be sewn or only the chip 201 may be sewn.

Alternatively, both antenna 2020 and chip 201 may be sewn
Preferably, in such an embodiment, the chip 201 may be arranged in the centre of the fabric.

At this point, the method 1 includes a step "e" of providing a mould.

Preferably, the step "e" includes providing a compression mould.

The method 1 includes a step "f" of inserting the semi-finished product and the trackable insert 300 into the mould.

In other words, in step "f" the semi-finished product and the trackable insert 300 are arranged in the mould according to a mutual positioning which depends on the shape of the semi-finished product and/or the shape of the trackable insert 300.

For example, according to a particular embodiment of the method 1, the step "b" of providing a semi-finished product may include providing a semi-finished product of substantially rough shape and obtaining a cavity and/or a cut in the semi-finished product itself.

In such an embodiment, the step "f" of inserting the semi-finished product and the trackable insert 300 into the mould may comprise a sub-step in which the trackable insert 300 is inserted into the cavity and/or cut such that the trackable insert 300 is arranged in an inner and preferably central portion of the semi-finished product.

According to a particular exemplary and non-limiting embodiment of the method 1, the step "b" of providing a semi-finished product may include providing a lower portion and an upper portion of the semi-finished product.

In such an embodiment, the next step "f" of inserting the semi-finished product and the trackable insert 300 into a mould may comprise a sub-step in which the trackable insert 300 is interposed between the bottom portion and the top portion.

At this point, the method 1 includes a step "g" of obtaining a trackable body by moulding the semi-finished product together with the trackable insert 300.

In other words, the semi-finished product together with the trackable insert 300 is compressed into a mould under a certain pressure so as to make the trackable insert 300 integral with the semi-finished product.

Preferably, the step "g" comprises a sub-step "g'" of vulcanizing the semi-finished product together with the trackable insert 300.

Preferably, in this sub-step "g'" the semi-finished product together with the trackable insert 300 are brought and maintained at a temperature between 150°C and 220°C, even more preferably they are brought and maintained at a temperature of 200°C.

Furthermore, said sub-step "g" has a duration between 1 minute and 60 minutes, preferably said sub-step "g" has a duration of 10 minutes.

Advantageously, the textile technique used to join the tracking device 200 to an insert 100 consisting substantially of elastomeric material substantially allows the trackable insert 300 to shape itself seamlessly to the semi-finished product in the moulding step "g", and in particular in the vulcanizing sub-step "g"', and at the same time allows the tracking device 200, and in particular the antenna 202, to be uniformly incorporated into the elastomeric material, going to accommodate the deformations of the trackable body during the mechanical stresses and/or during the deformations which the trackable body undergoes during the useful life thereof without the danger of being damaged or broken.

The present invention also relates to a trackable body comprising a body of elastomeric material into which the tracking device 200 is incorporated by the above-described method 1.

The trackable body can be a generic artefact, or a portion of an artefact, of elastomeric material which needs to be tracked for any application.

According to a particular and exemplary embodiment, the trackable body may be a trackable golf ball "P".

In particular, said trackable golf ball "P" comprises a core made by the aforesaid method 1 and an outer shell operatively arranged to cover the core.

Advantageously, the present invention overcomes the drawbacks of the known art by ensuring a method 1 for incorporating a tracking device 200 within a body of elastomeric material, as well as a trackable body and in particular a trackable golf ball "P" capable of withstanding mechanical stresses to which, normally such an elastomeric body is subjected in use during the useful life thereof.

Such a result is achieved by using a trackable insert 300 consisting of a base of elastomeric material which during the moulding process becomes an integral part of the semi-finished product in which it is inserted, ensuring the absence of discontinuities and avoiding the aforementioned known problems.

A further object achieved is that of providing a method 1 for incorporating a tracking device 200 within a body of elastomeric material, as well as a trackable body and in particular a trackable golf ball "P" which ensure the substantial integrity of the tracking device 200 incorporated within the elastomeric body.

Such a result is achieved by the peculiar textile technique with which the tracking device 200 is joined to the insert 100 as well as by the aforementioned fact that the insert 100, as well as the semi-finished product, are both made of an elastomeric material.

In particular, the textile technique ensures a better insertion of the tracking device 200, and in particular of the antenna 202, which seamlessly fits inside the body, going to accommodate the deformations and mechanical stresses which the trackable body undergoes during the useful life thereof. A further object achieved is to provide a method 1 for incorporating a tracking device 200 within a body of elastomeric material, as well as a trackable body and in particular a trackable golf ball "P" which ensure the normal operation and performance of the trackable elastomeric body.

In fact, since, following the moulding and vulcanization, the trackable body does not have internal discontinuities and since the tracking device 200 is substantially positioned in an internal portion thereof, the essential structure of the trackable body is not altered.

## Claims

1. Method (1) for incorporating a tracking device (200) within a body of elastomeric material, comprising the steps of:
a) providing a semi-finished product made of a raw elastomeric material, preferably rubber or a thermoplastic polymer;
b) providing a tracking device (200);
c) providing an insert (100);
d) joining by means of textile technique said tracking device (200) and said insert (100) so as to obtain a trackable insert (300); wherein said step (c) of providing the insert (100) includes providing a support in raw elastomeric material comprising rubber or a thermoplastic polymer;
e) providing a mould;
f) inserting said semi-finished product and said trackable insert (300) into said mould;
g) obtaining a trackable body by moulding said semi-finished product together with said trackable insert (300) making the trackable insert (300) integral with the semi-finished product; wherein said step (g) of obtaining a trackable body by moulding said semi-finished product together with said trackable insert (300), comprises a sub-step (g') of vulcanizing said semi-finished product together with said trackable insert (300).

2. Method (1) according to claim 1, wherein said step (b) of providing a tracking device (200) includes providing an RFID tag, comprising a chip (201) and an antenna (202), associated with said chip (201), made of a ductile material and in a threadlike shape.

3. Method (1) according to claim 2, wherein said step (d) of joining said tracking device (200) and said insert (100) includes sewing the RFDI tag on the insert (100).

4. Method (1) according to claim 2, wherein said step (c) of providing the insert (100) includes providing a plurality of thermoplastic threads.

5. Method (1) according to claim 4, wherein said step (d) of joining said tracking device (200) and said insert (100) includes weaving the plurality of thermoplastic threads with said antenna (202), thereby obtaining a knit thermoplastic fabric in which one fibre is formed by said antenna (202).

6. Method according to claim 4, wherein said step (d) of joining said tracking device (200) and said insert (100) includes weaving the plurality of thermoplastic threads to obtain a knit thermoplastic fabric on which said RFDI tag is sewn.

7. Method (1) according to any one of the preceding claims, wherein said step (a) of providing a semi-finished product involves providing a semi-finished product of substantially rough shape and obtaining a cavity and/or a cut in said semi-finished product; and in which said step (f) of inserting said semi-finished product and said trackable insert (300) into a mould comprises a sub-step of inserting said trackable insert (300) into said cavity and/or cut so that said trackable insert (300) is arranged in an internal and preferably central portion of said semi-finished product.

8. Method (1) according to any one of the preceding claims 1 to 6, wherein said step (a) of providing a semi-finished product includes providing a lower portion and an upper portion of said semi-finished product; and in which said step (f) of inserting said semi-finished product and said trackable insert (300) into a mould comprises a sub-step of interposing said trackable insert (300) between said lower portion and said upper portion.

9. Method (1) according to any one of the preceding claims, wherein said step (e) of providing a mould involves providing a compression mould.

10. Trackable body comprising a body of elastomeric material in which a tracking device (200) is incorporated by means of a method according to any one of the preceding claims 1 to 9.

11. Trackable golf ball (P) comprising a core made by means of a method according to any one of claims 1 to 9, and an outer shell operatively arranged to cover said core.

## Patentansprüche

1. Verfahren (1) zum Einbauen einer Nachführvorrichtung (200) in einen Körper aus elastomerem Material, umfassend die folgenden Schritte:
a) Bereitstellen eines halbfertigen Produkts aus einem elastomeren Rohmaterial, vorzugsweise Kautschuk oder einem Thermoplast-Polymer;
b) Bereitstellen einer Nachführvorrichtung (200);
c) Bereitstellen eines Einsatzes (100);
d) Zusammenfügen der Nachführvorrichtung (200) und des Einsatzes (100) mittels einer Textiltechnik, sodass ein nachführbarer Einsatz (300) hergestellt wird, wobei der Schritt (c) zum Bereitstellen des Einsatzes (100) das Bereitstellen einer Stütze aus elastomerem Material, umfassend Kautschuk oder einen Thermoplast-Polymer, einschließt;
e) Bereitstellen einer Form;
f) Einsetzen des halbfertigen Produkts und des nachführbaren Einsatzes (300) in die Form;
g) Herstellen eines Nachführkörpers durch Formen des halbfertigen Produkts zusammen mit dem nachführbaren Einsatz (300), indem der nachführbare Einsatz (300) fest mit dem halbfertigen Produkt verbunden wird, wobei der Schritt (g) zum Herstellen eines Nachführkörpers durch Formen des halbfertigen Produkts zusammen mit dem nachführbaren Einsatz (300) einen Unterschritt (g') zum Vulkanisieren des halbfertigen Produkts zusammen mit dem nachführbaren Einsatz (300) umfasst.

2. Verfahren (1) nach Anspruch 1, wobei der Schritt (b) zum Bereitstellen einer Nachführvorrichtung (200) das Bereitstellen eines RFID-Tags, umfassend einen Chip (201) und eine Antenne (202), die mit dem Chip (201) assoziiert ist, bestehend aus einem verformbaren Material und in einer fadenähnlichen Form, einschließt.

3. Verfahren (1) nach Anspruch 2, wobei der Schritt (d) zum Zusammenfügen der Nachführvorrichtung (200) und des Einsatzes (100) das Heften des RFID-Tags auf den Einsatz (100) einschließt.

4. Verfahren (1) nach Anspruch 2, wobei der Schritt (c) zum Bereitstellen des Einsatzes (100) das Bereitstellen einer Vielzahl von Thermoplast-Fäden einschließt.

5. Verfahren (1) nach Anspruch 4, wobei der Schritt (d) zum Zusammenfügen der Nachführvorrichtung (200) und des Einsatzes (100) das Verweben der Vielzahl von Thermoplast-Fäden mit der Antenne (202) einschließt, wodurch ein Thermoplast-Strickgewebe hergestellt wird, bei dem eine Faser durch die Antenne (202) geformt ist.

6. Verfahren nach Anspruch 4, wobei der Schritt (d) zum Zusammenfügen der Nachführvorrichtung (200) und des Einsatzes (100) das Verweben der Vielzahl von Thermoplast-Fäden einschließt, um ein Thermoplast-Strickgewebe herzustellen, auf das das RFID-Tag geheftet ist.

7. Verfahren (1) nach einem der vorhergehenden Ansprüche, wobei der Schritt (a) zum Bereitstellen eines halbfertigen Produkts das Bereitstellen eines halbfertigen Produkts mit einer im Wesentlichen rohen Form und das Herstellen eines Hohlraums und/oder eines Einschnitts im halbfertigen Produkt beinhaltet, und wobei der Schritt (f) zum Einsetzen des halbfertigen Produkts und des nachführbaren Einsatzes (300) in eine Form einen Unterschritt zum Einsetzen des nachführbaren Einsatzes (300) in den Hohlraum und/oder den Einschnitt umfasst, sodass der nachführbare Einsatz (300) in einem internen und vorzugsweise mittleren Abschnitt des halbfertigen Produkts angeordnet ist.

8. Verfahren (1) nach einem der vorhergehenden Ansprüche 1 bis 6, wobei der Schritt (a) zum Bereitstellen eines halbfertigen Produkts das Bereitstellen eines unteren Abschnitts und eines oberen Abschnitts des halbfertigen Produkts umfasst und wobei der Schritt (f) zum Einsetzen des halbfertigen Produkts und des nachführbaren Einsatzes (300) in eine Form einen Unterschritt zum Einfügen des nachführbaren Einsatzes (300) zwischen den unteren Abschnitt und den oberen Abschnitt umfasst.

9. Verfahren (1) nach einem der vorhergehenden Ansprüche, wobei der Schritt (e) zum Bereitstellen einer Form das Bereitstellen einer Pressform beinhaltet.

10. Nachführkörper, umfassend einen Körper aus elastomerem Material, in dem eine Nachführvorrichtung (200) mittels eines Verfahrens nach einem der vorhergehenden Ansprüche 1 bis 9 integriert ist.

11. Nachführbarer Golfball (P), umfassend einen Kern, der mittels eines Verfahrens nach einem der Ansprüche 1 bis 9 hergestellt ist, und eine Außenhülle, die betriebswirksam angeordnet ist, um den Kern zu bedecken.

## Revendications

1. Procédé (1) d'incorporation d'un dispositif de poursuite (200) dans un corps de matériau élastomère, comprenant les étapes consistant à :
a) fournir un produit semi-fini fait d'un matériau élastomère brut, de préférence du caoutchouc ou un polymère thermoplastique ;
b) fournir un dispositif de poursuite (200) ;
c) fournir un insert (100) ;
d) joindre au moyen d'une technique textile ledit dispositif de poursuite (200) et ledit insert (100) de manière à obtenir un insert traçable (300) ; dans lequel ladite étape (c) consistant à fournir l'insert (100) comprend la fourniture d'un support en matériau élastomère brut comprenant du caoutchouc ou un polymère thermoplastique ;
e) fournir un moule ;
f) insérer ledit produit semi-fini et ledit insert traçable (300) dans ledit moule ;
g) obtenir un corps traçable par moulage dudit produit semi-fini avec ledit insert traçable (300) rendant l'insert traçable (300) solidaire du produit semi-fini ; dans lequel ladite étape (g) consistant à obtenir un corps traçable par moulage dudit produit semi-fini avec ledit insert traçable (300), comprend une sous-étape (g') consistant à vulcaniser ledit produit semi-fini avec ledit insert traçable (300).

2. Procédé (1) selon la revendication 1, dans lequel ladite étape (b) consistant à fournir un dispositif de poursuite (200) comprend la fourniture d'une étiquette RFID, comprenant une puce (201) et une antenne (202), associée à ladite puce (201), faite d'un matériau ductile et dans une forme filiforme.

3. Procédé (1) selon la revendication 2, dans lequel ladite étape (d) consistant à joindre ledit dispositif de poursuite (200) et ledit insert (100) inclut la couture de l'étiquette RFDI sur l'insert (100).

4. Procédé (1) selon la revendication 2, dans lequel ladite étape (c) consistant à fournir l'insert (100) comprend la fourniture d'une pluralité de fils thermoplastiques.

5. Procédé (1) selon la revendication 4, dans lequel ladite étape (d) consistant à joindre ledit dispositif de poursuite (200) et ledit insert (100) inclut le tissage de la pluralité de fils thermoplastiques avec ladite antenne (202), obtenant ainsi un tissu thermoplastique tricoté dans lequel une fibre est formée par ladite antenne (202).

6. Procédé selon la revendication 4, dans lequel ladite étape (d) consistant à joindre ledit dispositif de poursuite (200) et ledit insert (100) inclut le tissage de la pluralité de fils thermoplastiques pour obtenir un tissu thermoplastique tricoté sur lequel ladite étiquette RFDI est cousue.

7. Procédé (1) selon l'une quelconque des revendications précédentes, dans lequel ladite étape (a) consistant à fournir un produit semi-fini implique fournir un produit semi-fini de forme sensiblement rugueuse et obtenir une cavité et/ou une coupe dans ledit produit semi-fini ; et dans lequel ladite étape (f) consistant à insérer ledit produit semi-fini et ledit insert traçable (300) dans un moule comprend une sous-étape consistant à insérer ledit insert traçable (300) dans ladite cavité et/ou ladite coupe de sorte que ledit insert traçable (300) est agencé dans une partie interne et de préférence centrale dudit produit semi-fini.

8. Procédé (1) selon l'une quelconque des revendications précédentes 1 à 6, dans lequel ladite étape (a) consistant à fournir un produit semi-fini inclut la fourniture d'une partie inférieure et d'une partie supérieure dudit produit semi-fini ; et dans lequel ladite étape (f) consistant à insérer ledit produit semi-fini et ledit insert traçable (300) dans un moule comprend une sous-étape consistant à interposer ledit insert traçable (300) entre ladite partie inférieure et ladite partie supérieure.

9. Procédé (1) selon l'une quelconque des revendications précédentes, dans lequel ladite étape (e) consistant à fournir un moule implique fournir un moule de compression.

10. Corps traçable, comprenant un corps en matériau élastomère dans lequel un dispositif de poursuite (200) est incorporé au moyen d'un procédé selon l'une quelconque des revendications précédentes 1 à 9.

11. Balle de golf traçable (P), comprenant un noyau fabriqué au moyen d'un procédé selon l'une quelconque des revendications 1 à 9, et une coque extérieure agencée de manière opérationnelle pour recouvrir ledit noyau.
